# EUROPEAN PATENT APPLICATION

(11) **EP 1 302 959 A2**
(43) Date of publication of application: **16.04.2003**
(21) Application number: 02257161.6
(22) Date of filing: 14.10.2002
(51) Int. Cl.: H01H 33/52, H01H 33/14

(54) **Improvements relating to electrical switches**

(30) Priority: 13.10.2001 GB 0124653
(71) Applicant: Alstom, 75795 Paris Cedex 16 (FR)
(72) Inventor: Casey, John Gerard, Wildbrook Crescent, Oldham OL8 2NY (GB); Gray, Martin, Hyde, Cheshire SK14 4QH (GB)
(74) Representative: Dargavel, Laurence Peter

(57) **Abstract**

A mechanical actuator mechanism for first and second electrical switches (13, 14) connected in series. The first and second switches are driven to open or closed positions through respective first and second shafts (16, 14a) linked to respective first and second mechanical energy stores (112, 201, Fig. 9), operation of the switches being co-ordinated by latch means (301, 302) which in use prevent or permit rotation of the shafts, thereby to synchronise release of energy from the energy stores to rotate the shafts.

To be accompanied, when published, by Figures 3 **and 9(a)** of the drawings.

## Description

### Field of the Invention

This invention relates to improvements in electrical switch assemblies, and in particular to actuator mechanisms adapted to control the operation of at least two electrical switches. The mechanisms are suitable for use in controlling the switches in a ring main switching unit for medium voltage electrical transmission.

### Background of the Invention

Electrical switches for use in connecting and disconnecting conductors that carry medium to high voltages are well developed in the art. Such switches essentially comprise conductive contacts and an actuating mechanism to open (break) or close (make) a connection between the contacts. These contacts, and the associated actuating mechanism must meet several requirements depending on the proposed use. For example, if the actuating mechanism breaks the connection by moving the contacts apart when an electrical load is flowing, they may be required to be moved very quickly to rapidly extinguish arcing between the contacts. If switching only occurs when current is not flowing, the movement can be slower. The force needed to open when current is flowing must also be high as the current may cause the contacts to stick together. Switches that can be opened when current flows are therefore invariably more expensive.

Two types of electrical switch are commonly used for switching medium-to-high electrical voltages. These are the blade type (or "knife" type) of switch (often used in conjunction with a quenching medium) and the vacuum interrupter type of switch. Both types require the actuator mechanism either to rapidly throw open/close the blade or to rapidly open/close the vacuum interrupter contacts.

One example of a device which may incorporate such switches is a ring main unit (RMU). Ring main units are typically provided as the final link in the high voltage (HV) electrical distribution chain between the supply and a consumer. The unit allows the so-called "T-off" connection from a ring main to a load to be isolated from one or both sides of the ring main, or else it can isolate the load from the T-off point. The load will typically comprise a step-down transformer.

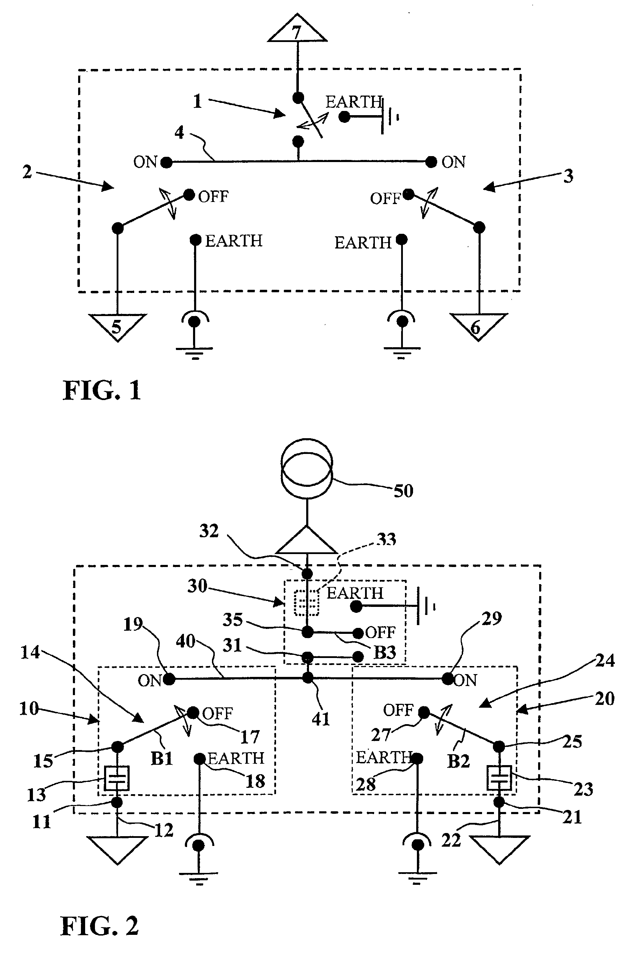

As shown in Figure 1 of the accompanying drawings, a simple ring main unit includes a circuit breaker 1 that isolates a transformer from a T-off. The transformer is not shown, but is connected at T-off outlet 7. Two additional, manually controlled ring switches 2,3 isolate the T-off busbar 4 from the two sides 5,6 of the ring main. The T-off circuit breaker 1 will typically have a fault make/fault break rating. The ring switches 2 and 3 will typically only have fault make/load break rating as it is unlikely that the switches will be required to interrupt fault currents. Any faults detected with the ring switches closed will be cleared elsewhere in the ring main circuit. Nevertheless, the need for a load break rating means that a quenching medium such as SF6 is usually needed if a blade type switch is to be used. This medium is increasingly being recognised as an environmental hazard.

The applicant proposes to provide a ring main unit in which two serially connected switches are provided for isolating the unit from a part of the ring. The two switches would replace the single switch and would include a vacuum interrupter in series with a blade type of switch. An advantage of such an arrangement is that the vacuum interrupter can be used to fulfil the necessary switching duties, while the blade switch can be moved to the open position when it is off load. This allows a lower rated blade switch to be used, possibly without the need for a quenching medium. No arcing will occur with the blade switch and arcing within the vacuum interrupter will be contained, making the product environmentally clean. Environmentally friendly insulating mediums can be used.

A problem recognised by the applicant is that when switches in series are utilised as described in the preceding paragraph, an interlock must be provided to ensure that the blade-type switch can not be moved unless the vacuum interrupter is open.

It is an object of this invention to provide an actuator mechanism suitable for operating the two serially connected switches of a ring main unit as set out hereinbefore. Of course, it is envisaged that the actuator mechanism may have other applications in medium to high voltage electrical systems and that the invention should not necessarily be limited to ring main units.

### Summary of the Invention

Accordingly, the invention provides a mechanical actuator mechanism for first and second electrical switches connected in series, the first and second switches being driven to open or closed positions through respective first and second shafts linked to respective first and second mechanical energy stores, operation of the switches being co-ordinated by latch means which in use prevent or permit rotation of the shafts, thereby to synchronise release of energy from the energy stores to rotate the shafts.

Other aspects of the invention will be apparent from a study of the following description and claims.

The mechanical actuator mechanism disclosed herein is capable of controlling the operation of at least two electrical switches, the mechanism being operable between at least a first position in which both switches are in an closed position and a second position in which both switches are in a open position; wherein upon movement of the mechanism from the first position to the second position the first switch moves from its closed position to its open position, whereafter the second switch is automatically moved from its closed to its open position; and upon movement of the operating means from the second position to the first position the second switch moves from its open position to its closed position, whereafter the first switch is automatically moved from its open to its closed position.

The operating means therefore provides a controlled sequence of closure/opening of the switches to ensure that they can only be moved in a predetermined sequence.

The operating means may include an input device, such as a lever or handle which can be moved by an operator (or other source of mechanical energy) to move the operating mechanism from its first to its second position or vice versa.

The mechanism should be arranged such that the first switch is completely open before the second switch is moved from its closed to its open position. Also, the mechanism should be adapted such that the second switch is completely closed before the first switch is moved from its open to its closed position.

The mechanism is preferably entirely mechanical, relying upon mechanical energy to open and/or close the switches. Movement of the input device may be arranged to cause the operating mechanism automatically to move from the first to the second position and/or the second position to the first position with a single, continuous, movement of the input device.

The first mechanical energy store may be adapted to be released when the operating mechanism is operated to provide the motive force required to open and/or to close at least the first switch. A manually- or motor-powered charging mechanism may be provided to input energy to the mechanical energy store.

The charging mechanism may be moved in the same direction to move the operating mechanism from its first to its second position as it is to move it from its second to its first position.

An interlock may be provided which prevents the operating mechanism being actuated unless a sufficient amount of energy is stored in the store.

The interlock may prevent a user moving the input device until a sufficient charge is present in the store.

The actuator mechanism may be adapted to release mechanical energy from the first store upon movement of the mechanism from the first to the second position to force open the first switch. In the case of a ring main unit, this switch should comprise a vacuum interrupter switch.

The mechanism may further be adapted to release at least some of the mechanical energy in the store upon movement of the mechanism from the second to the first position to force closed the first switch. This may be released when the input device reaches a predetermined position.

The mechanism may be adapted such that upon movement of the first switch from the open to the closed position the first switch will hold itself closed against the over-centre mechanism.

The mechanism may move the switch in one direction until the mechanism passes an equilibrium point whereafter any force generated by the switch itself to attempt to open the switch acts against the mechanism to hold the switch firmly closed. This ensures that the mechanism does not require mechanical stored energy to hold the switch closed since it holds itself closed.

The operating mechanism may further include a second store of mechanical energy is adapted to provide the motive force required at least to close the second switch and may also provide the mechanical energy required to open the second switch. Energy stored in the first store may provide the energy to initiate the release of energy in the second store.

The or each of the first and the second mechanical energy stores may conveniently comprise springs, such as torsion springs. A separate charging means may be provided for inputting mechanical energy into one or other or both of the springs. The springs may be placed in either tension or compression, or in bending. The charging means for the first switch may comprise a winding handle which is separate from the input device. The charging means for the second energy store may be integral to the input device such that movement of the input device charges the second store.

The latch means is adapted to selectively hold energy in the first store and release the energy in the first store when the input device is moved.

The latch may only release a portion of the energy in the store upon each operation of the operating mechanism such that the store holds sufficient energy for more than one operation.

Of course, in most arrangements the energy needed to open the first switch must act in an opposite sense to that needed to close the first switch. For example, the first switch may be pulled open by the operating mechanism and pushed closed. In other arrangements the first switch may need to be pushed closed and pulled open.

The first energy store may therefore be adapted to store energy in a first sense when the first switch is closed and in the opposite sense when the first switch is open. For example, if it comprises a torsion spring it may be charged by bending it in one direction when the operating mechanism is in the first position and bending it in the opposite direction when the operating mechanism is in the second position.

In one arrangement, the energy in the first store may act to open/close the first switch through a reciprocating link whereby the link is pulled one way and then pushed the other way when moving between the first and second positions of the operating mechanism.

The charging means for the first energy store may comprise a handle attached to one end of the link which can be rotated by a user to drive the reciprocating link, and the other end of the link being operatively connected to the first energy store. This may comprise one end of a torsion spring, the second end of the spring being fixed against rotation during charging by the latch mechanism, and released by the latch mechanism upon movement of the operating mechanism to release the energy.

The handle may further be attached to a rotating cam. A keeper may be provided which engages a recess in the cam each time the handle is rotated through 180 degrees to prevent the cam unwinding. Thus, on each half turn of the handle the spring is charged in one direction or the other by the reciprocating link to alternately compress the spring or place it in tension.

In an alternative, the first end of the first spring may be connected to a portion of the charging cam whilst the other end is fixed against movement. Thus, rotation of the handle winds up the spring. The spring may be arranged to be permitted to only partially unwind for each operation of the mechanism sufficient to drive the reciprocal link through 180 degrees. Thus, on opening the link will move one way, on closing the other and so on until the energy in the spring is exhausted. Depending on the energy that can be stored in the first spring it will then only be necessary to periodically charge the mechanism rather than charge before every operation.

Of course, it will be appreciated that the charging cam could be connected to the reciprocal link through a gear so that movement of more or less than one half turn of the charging cam is needed to move the reciprocal link from one extreme to the other.

Because opening and closing of the first switch is driven by stored mechanical energy a high force and high closing speed can be applied with little effort from the user. Also, the speed of opening and closing is accurately controlled so that the switches open/close in sequence with a predetermined delay. Also, there is no need for a separate electrical supply to the operating mechanism as would be required if electromagnetic actuators were used.

Of course, if desired an electric actuator may be provided which drives the actuator mechanism. For example, an electric motor may be provided which provides the energy to be stored in the store prior to operating the mechanism.

In a refinement, the operating assembly may be movable between the first and/or the second position to a third position in which the second switch is moved into a third position prior to the first switch moving to the closed position. This third position of the second switch may be an earth position.

In accordance with a second aspect, the invention provides a switch assembly which includes at least two serially connected switches controlled by an actuator mechanism in accordance with the first aspect of the invention, the first switch comprising a vacuum interrupter type switch and the second switch comprising a blade type switch.

In this text it is to be understood that the term switch is intended to cover a selector switch.

The vacuum interrupter switch may have a fault make/load break rating with respect to the electrical current expected in the circuit in which it is connected.

The blade type switch may be movable between a single off position and at least two different closed positions, i.e. on and earth.

The switch assembly may form a part of a ring main unit (RMU) or a part of a circuit breaker.

### Brief Description of the Drawings

There will now be described, by way of example only, embodiment**s** of the present invention with reference to the accompanying drawings**,** of which:
**Figure 1** is a schematic representation of a typical prior-art ring main unit for medium electrical voltages;
**Figure 2** is a similar schematic representation of a ring main unit incorporating a switch actuator mechanisms in accordance with the present invention;
**Figure 3** is a cross-sectional exploded view of a ring main unit embodying the schematic of Figure 2 of the accompanying drawings;
**Figure 4** is a plan view of an actuator mechanism in accordance with the present invention when in its rest state with both of the switches it drives being open;
**Figure 5** is the same as the plan view of the actuator mechanism in accordance with the present invention when in its charged state with both of the switches it drives being open;
**Figure 6** is a plan view of the actuator mechanism in accordance with the present invention when in its rest state with both of the switches it drives being closed;
**Figure 7** is a plan view of the actuator mechanism in accordance with the present invention when in its charged state with both of the switches it drives being closed;
**Figure 8** is a plan view of a modified actuator mechanism in accordance with the present invention which incorporates an alternative charging mechanism; and
**Figures 9(a) to (d)** illustrate the position of the ends of the first and second charging springs during different operational states of the mechanism.

### Detailed Description of Preferred Embodiments

Figure 2 of the accompanying drawings is a simplified circuit diagram of a ring main unit (RMU) that incorporates actuator mechanisms in accordance with one aspect of the invention.

The circuit has three phases, although only a single phase is shown in the illustration. For each phase, the circuit comprises three switch assemblies 10, 20, 30. Each of the first and second switch assemblies 10,20 comprises two switches 13,14,23,24 connected in series. A first switch 13, 23 in each switch assembly 10, 20 is of the vacuum interrupter type. The second switch in each switch assembly 10, 20 comprises a three position blade type of switch 14,24. The vacuum interrupter switches 13,23 have a fault make/load break capability and each is operable to either connect its associated blade switch 14, 24 to a respective ring main conductor 12, 22 or to isolate it therefrom.

In each of the first two switch assemblies 10,20, a single input node 11,21 is connected to a respective conductor 12,22 of a ring main circuit. An output node 19,29 of each switching assembly 10,20, is connected to a busbar 40. An input node 31 of the third switch assembly 30 is connected to a point 41 of the busbar 40 and an output node 32 of the third switch assembly is connected to a step-down transformer 50 and then on to a consumer load (not shown).

Each three position blade type of switch 14,24 comprises a movable conductive blade B1,B2 that pivots about a first end 15, 25, where it is electrically connected through the other of the two vacuum interrupter switches 13, 23 to the node 11,21. The free ends of the blades can be positioned to electrically contact the busbar 40 at positions 19,29, or rotated to off positions 17,27 or earth points 18, 28.

The third switch assembly 30 comprises a blade-type switch of similar construction to the switches 14 and 24, having a blade B3 pivoted at 35. It will not be described in any further detail, except that, optionally, switch assembly 30 may additionally comprise a vacuum interrupter 33 (indicated in dotted lines) connected between the blade pivot 35 and the output node 32. This optional vacuum interrupter may be rated as load make/load break, fault make/load break, or fault make/fault break. Its rating - or whether or not a vacuum interrupter of any rating is included in the third switch assembly 30 of the ring main unit - depends on a design compromise made on the basis of additional cost per unit versus additional functionality of the unit.

In use of the ring main unit, the two vacuum interrupters 13, 23 of the first and second switch assemblies 10, 20 are normally closed with the blade switches 14,24 also closed, i.e., with blades B1, B2 in contact with the busbar 40, to allow current to flow from the ring circuit to the busbar 40.

The third switch assembly 30 is also closed to allow current to be drawn by the consumer load.

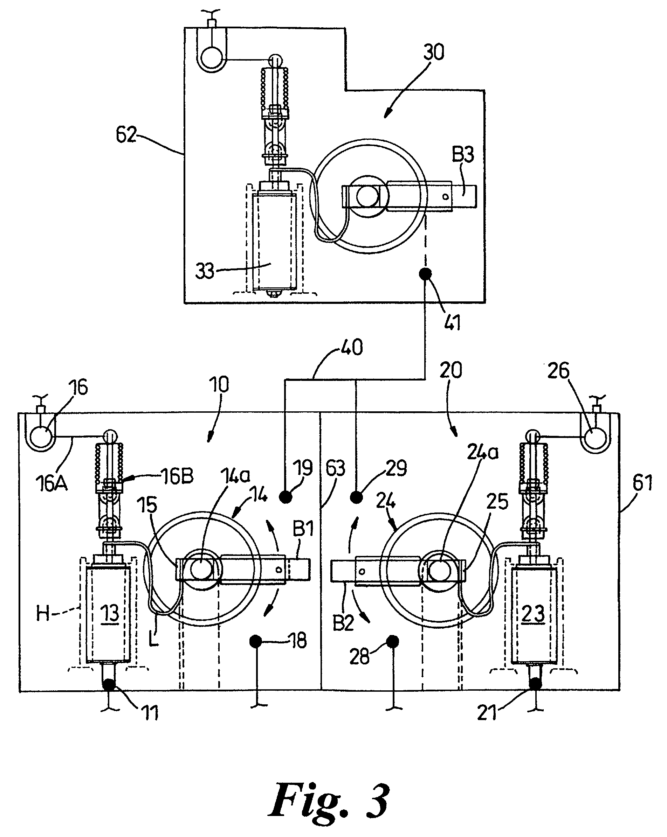

An example of a practical embodiment of ring main unit is shown schematically in the cut away partially exploded view of Figure 3 of the accompanying drawings. The unit has a two part casing 61, 62, typically of an insulating material. A lower piece 61 of the casing has a base, four walls and an open top and is split by a partition 63 into two chambers - a left hand chamber and a right hand chamber. Each of the first two switch assemblies 10,20 is located respectively in the left or the right hand chamber with the busbar 40 connecting across the top of the chambers. The third switch assembly 30 is located in the second, upper casing 62, that is lowered onto and secured to cover the top of the lower portion of casing 61.

The left hand and right hand switch assemblies 10,20 are mirror images of one another and the top switch assembly 30 is of similar construction to switch assembly 10. For ease of explanation, only the left hand assembly 10 will be described hereinafter. Also, it may be noted that the third switch assembly 30 is identical to the first two with the exception that in this particular instance it includes a vacuum interrupter that has a lower rating. Use of common component parts considerably reduces the cost of the unit when compared to a unit that uses bespoke parts.

Each of the first two switch assemblies is controlled by an actuator mechanism, not shown in Figure 3. The role of the actuator mechanism is to control the movement of the switches and also to provide an interlock that governs the order of opening and closing of the switches. It can be seen in Figure 3 that the two vacuum interrupter switches 13,23 of each switch assembly 10,20 are opened and closed by rotation of a drive shaft 16 that acts through a lever 16A and a known spring-loaded actuator 16B, whilst the blade B1 of switch 14 is moved by rotation of a respective selector shaft 14a attached directly to the pivoted end 15 of the blade. Like the other blades B2 and B3, blade B1 is shown in the "off" position. A flexible electrical lead L connects the end 15 of blade B1 to the electrically conductive stem of a contact of the vacuum interrupter 13. The outer body of the interrupter is held rigidly against actuation forces from actuator 16B within a housing H (shown in dotted lines) attached to or forming part of the casing 61.

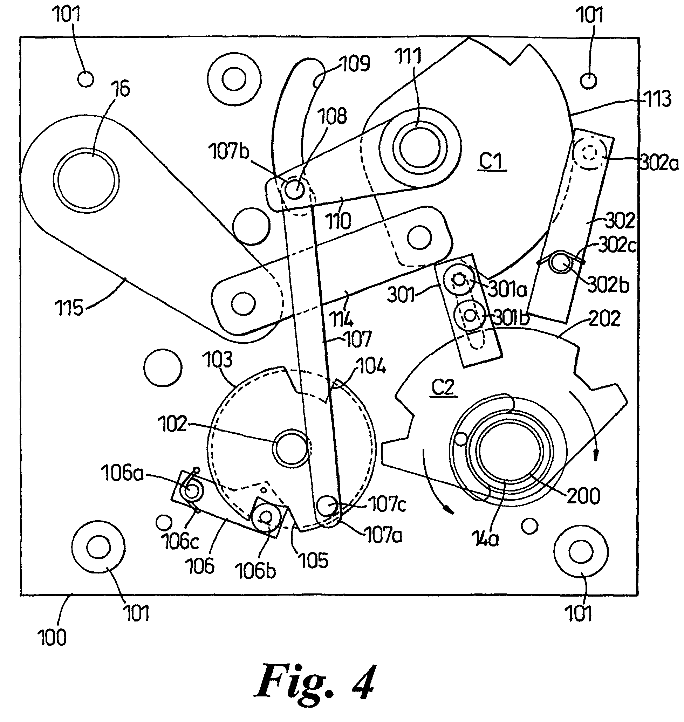

A first embodiment of an actuator mechanism for one of the switch assemblies 10, 20, 30 is illustrated in Figures 4 to 7 of the accompanying drawings. The mechanism shown corresponds to the left hand switch assembly 10 of Figure 3.

The actuator mechanism for the switch assembly is wholly mechanical and has two main user operable inputs in the form of a charging mechanism and an operating mechanism respectively. It has two outputs which provide rotary motion to the drive shaft 16 and selector shafts 14a of the vacuum interrupter and blade switches respectively. Operation of the mechanism is a two stage process. The mechanism must first be charged with mechanical energy using the charging mechanism. It can then be operated to move the switches using the operating mechanism, the movement of the switches being assisted by the pre-stored energy charge.

As shown in Figure 4, the mechanism has a supporting frame 100 comprising a stack of three support plates that are held together at the four corners by bolts 101. Only the uppermost support plate can be seen. Spacers, not shown, are provided so that each support plate is spaced from the adjacent plate in the stack. The majority of the moving components of the mechanism are supported by at least one pivot that passes through at least two of the plates at right angles to the plane of the plates. The remainder of the moving components are supported by these pivoted parts to define a complex inter-linked mechanical mechanism. For example, some of the components pass, at least partially, through openings in one or more of the plates, which openings act as guides that limit or control the range of available movement of the components. Elsewhere in the mechanism, stops attached to the sheets present limits to restrict movement of the components.

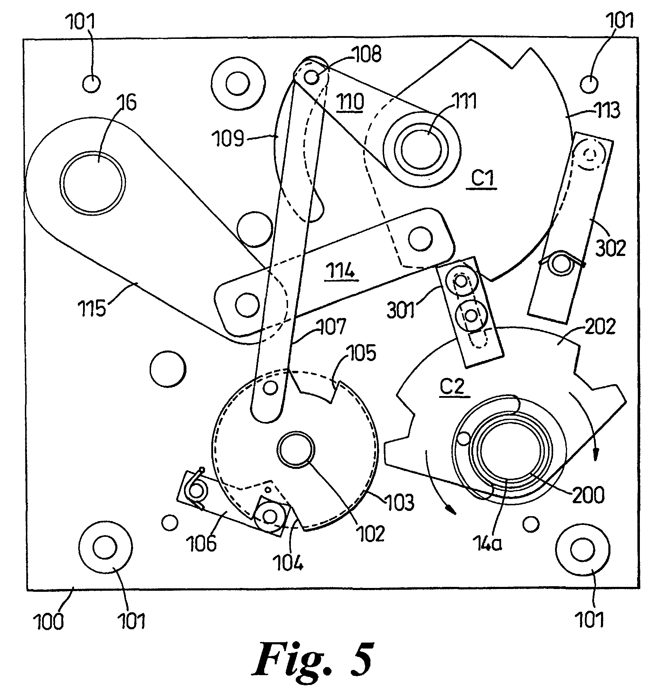

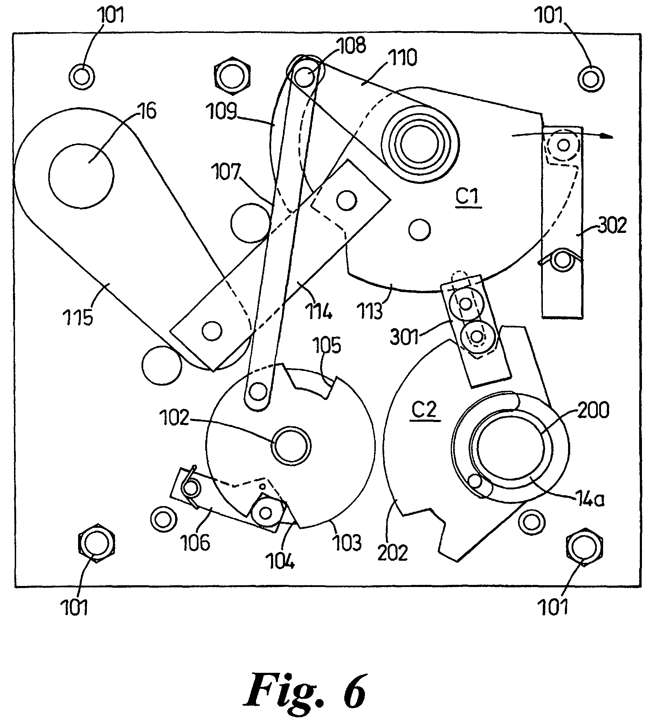

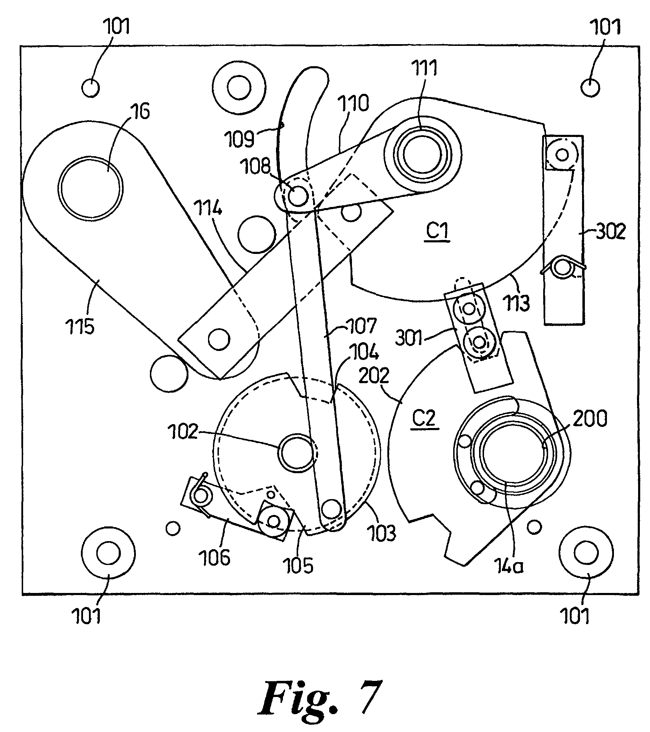

Figures 4,5, 6 and 7 show the mechanism in four positions. In Figure 4 the mechanism is shown in its rest state with the drive shaft 16 and selector shaft 14a aligned such that the two switches are open. In Figure 5 the mechanism has been charged prior to closing the switches. In Figure 6 the mechanism is in its rest state with the drive shaft 16 and selector shaft 14a aligned such that the two switches are closed. Finally, Figure 7 shows the state of the mechanism in the rest closed position but with the charging mechanism fully charged prior to opening the switches.

Referring again to Figure 4 of the accompanying drawings, the charging mechanism comprises a charging handle, not shown, that is splined to an axle 102 that is supported at each of its ends in a bearing (not shown) for rotation relative to the support plates. Rotation of the handle causes the axle 102 to rotate. The axle 102 supports a disc 103 which is of constant diameter apart from two indents 104, 105 spaced diametrically about the perimeter. A cam follower or catch 106 is provided that co-operates with the indents in the disc 103. The follower is an elongate element that is pivotally attached to the support plate at one end by a pin 106a. The other end carries a roller 106b that runs along the perimeter of the disc 103 and is biased into engagement with the disc by a small wrap spring 106c. Alternatively, a leaf spring may be provided which co-operates with an indented disk.

The catch co-operates with the indents 104, 105 on the perimeter of the disc 103 such that on rotation of the shaft 102 by the charging handle in a clockwise direction the disc 103 will rotate until the roller 106b drops into one of the indents. The leading edge of each indent is arranged so that the roller 106b cannot climb up it and the disc cannot rotate anti-clockwise once the charging handle is released. (As will subsequently become apparent, the disc 103 is biased anti-clockwise by energy stored in a spring). The trailing edge of the recess is arranged so that the roller 106b can climb it, thereby permitting further rotation in a clockwise direction of the disc. The charging handle can then be turned through a further 180 degrees to allow the catch to drop into the next recess and so forth.

A reciprocating link 107 is pivotally attached at one end 107a to the disc 103 by a pin 107c spaced from its axis of rotation. The other end 107b of the link 107 is provided with a pin 108 that works in a curved slot 109 cut into one of the supporting plates. The slot 109 limits the movement of the pin 108 such that as the charging handle rotates shaft 102 clockwise through 180 degrees, the pin 108 moves from one end of the slot 109 to the other, and for the next 180 degrees of shaft rotation it returns to its original position.

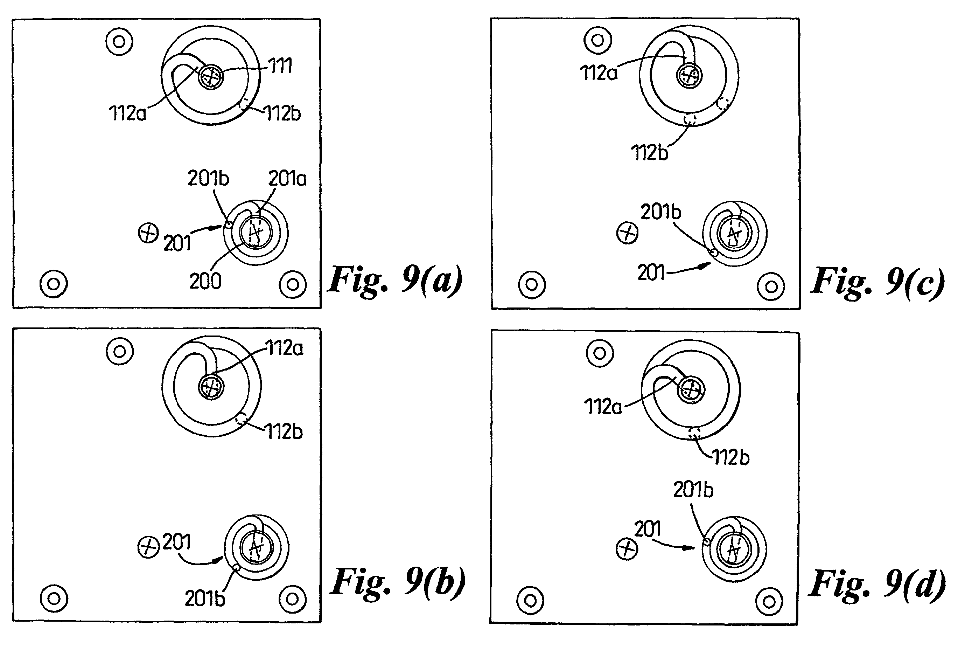

The pin 108 is also connected to one end of a lever 110. The other end of the lever is pivoted about a shaft 111 around which a first or main torsion spring 112 is located. The first torsion spring is not shown in Figure 4 to 7 but can be clearly seen in Figures 9(a) to 9(d) of the accompanying drawings.

A first end 112a of the coil spring 112 is located in a hole in the shaft 111 so that as the lever 110 moves it also moves the first end 112a of the spring 112. The other end of the spring 112b is attached through a suitable link arrangement 113, 114, 115 to the drive shaft 16 of the first vacuum interrupter switch 13.

During charging, the second end 112b of the first torsion spring 112 is prevented from movement by a latch mechanism 301, etc. (described later). Thus, as the shaft 102 is rotated clockwise, the first torsion spring 112 is initially wound in one direction to place energy in the spring (which wants to unwind). The energy in the first torsion spring can subsequently be released to actuate the first vacuum interrupter switch and so the first spring unwinds. In the next charging operation the second end 112b of the spring 112 is again fixed by the latch 301, but the first end 112a of the spring is moved in the opposite direction to place it in tension. When the second end is subsequently released the spring unwinds to actuate the first vacuum interrupter switch again.

The operating mechanism for the switch assembly 10 comprises an input device in the form of a hand operated selector handle (not shown) that is attached to an axle 200 that is in turn directly coupled to the selector shaft 14a of the blade B1 of switch 14. A second torsion spring 201 is attached at a first end 201a to the axle 200 and at the other end 201b to a part of the support frame 100. The location of the second spring (not shown in Figures 4 to 7) can be clearly seen in Figures 9(a) to (d). The selector handle can be rotated either clockwise or anti-clockwise to move the blade B1 and in doing so the second torsion spring 201 is either wound or unwound.

In operation of the actuator mechanism, the force needed to open or close the first (vacuum interrupter) switch 13 in the first switch assembly 10 is solely provided by the first torsion spring 112 as it unwinds from either being in tension or compression. In the case of movement of the second (blade type) switch 14, the user provides the force to move the switch from its initial position by rotating shaft 200 using the selector handle. The blade type switch 14 is returned to the initial position under the force of the second spring 201 without the user touching the handle.

Co-ordination of the rotation of the drive and selector shafts is achieved automatically by the switch assembly actuator mechanism by synchronising the time at which the energy in the torsion springs is released. This is controlled by the previously mentioned latch mechanism 301, etc. The latch mechanism also prevents movement of the switches when the springs are being charged.

The latch mechanism comprises two cam plates C1, C2 and two cam followers 301, 302. The cam plates respectively comprise a quadrant 113, 202 attached to the corresponding axles 111, 200 which pass through the centres of the first and second springs 112,201 respectively, with the curved perimeters of the quadrants facing each other. Each quadrant has two recesses in its perimeter - one at each end of a central arc of constant diameter. The two followers 301, 302 co-operate with the peripheral edges of the quadrants 113, 202 and can be moved into or out of co-operation with the recesses to prevent or permit the movement of the quadrants. A first cam C1 forms a part of the switch linkage that is attached to the second end 112b of the first spring 112, so is rotated by the first torsion spring 112 (when the cam is released by the cam follower(s)) as the first switch 13 opens or closes. The second cam C2 is rigidly attached to the selector shaft 200 of the second switch 14 and so rotates as the selector handle is rotated.

A first one of the followers 301 is located in the space between the two cams C1,C2. It comprises a bar supporting at each end a small roller 301a, 301b which are spaced apart by a distance greater than the spacing between the constant radius quadrant portions of the two cams. When the mechanism is at rest with both switches in the open position, the roller 301b at one end of the first follower 301 is engaged with the central portion of the second quadrant 202 with the other roller 301a engaged in a recess at one end of the first quadrant 113. The first follower 301 therefore prevents the first quadrant 113 rotating whilst the first torsion spring 112 is charged by rotating the charging handle. Of course, since the second roller 301b is on the fixed radius quadrant portion of the second cam C2, it allows the selector handle to be rotated.

The second follower 302 comprises a bar that is pivotally fixed by a shaft 302b to a part of the support frame 100 and carries a small roller 302a at the distal end. The second follower 302 is spring loaded as indicated at 302c so that the roller 302a engages with the centre of the perimeter of the first cam quadrant 113 when the mechanism is at rest with the switches closed. This follower provides the trigger for initiating an "open switches" sequence.

The location and operation of the various parts of the mechanism and their movement upon opening and closing of the switches is as follows:

### Mechanism at rest (springs uncharged - switches open)

The mechanism in this state is shown in Figure 4 of the accompanying drawings. The position of the ends of the first spring 112 and second spring 201 can be seen in Figure 9(a). At rest with both switches 13 and 14 open, the first follower 301 is engaged in one of the two recesses in the first cam quadrant 113. This prevents movement of the first cam C1 and in turn prevents movement of the second end 112b of the first spring 112 that acts through the linkage 113, 114, 115 to the drive shaft 16 of the first switch. The first spring 112 at this stage is uncharged and the second spring 201 is also uncharged. This is the typical rest state of the mechanism following opening of the two switches.

### Mechanism charged - switches open

Before the two switches can be closed, the first spring 112 must be charged by rotating the charging handle, and thereby shaft 102, clockwise through a half turn. This drives the reciprocating link 107 to rotate the arm 110, cam C1 and so the first end 112a of the first spring 112 through a set angle and the first spring is wound up. The catch 106 associated with charging disc 103 prevents the release of the stored energy by preventing the anti-clockwise rotation of the shaft 102. No other parts of the mechanism move at this stage and the mechanism is as shown in Figure 5 and Figure 9(b) of the accompanying drawings.

### Closing switches after charging

It will be noted that the first torsion spring 112 is charged and the second torsion spring is uncharged.

Closing is initiated by engaging the operating handle on shaft 14a and rotating anti-clockwise. This shaft, which is directly connected to cam C2, therefore rotates cam C2 anti-clockwise. At the extreme of its travel (after the point at which the switch 14 is fully closed, with blade B1 contacting busbar 40 at point 19) the roller 301b engages the recess in the perimeter of cam C2. This allows the roller 301a to disengage from the latch face recess at one end of the quadrant 113 of cam C1. Under the influence of the spring 112 the cam C1 is now free to rotate clockwise about its shaft 111. The switch 13 is thereby closed through the linkage 114,115.

### Mechanism at rest - all springs uncharged, switches both closed

Following the sequence set out in the above paragraph, the mechanism adopts the position shown in Figure 6 and Figure 9(c) of the accompanying drawings. The first torsion spring 112 is now uncharged, although both the first and second ends of the first spring 112 have been angularly displaced when compared to the at rest position with the switches open. The first cam C1 is again prevented from movement, but by the second follower 302 rather than the first follower 301.

### Mechanism at rest - first spring charged, switches both closed

To move the switches to the open position, the first torsion spring 112 must first be charged. This is achieved by rotating the charging handle through one half turn to rotate shaft 102 correspondingly. The reciprocal link 107 is displaced and in turn moves the first end 112a of the first spring via the link 110 and cam C1. In this case, the spring 112 is moved in a direction that places it in tension. No other components move at this stage. This is shown in Figure 7 and Figure 9(d) of the accompanying drawings.

### Opening the switches

In the next step, the user engages a handle on the pivot shaft 302b of the catch 302 and rotates the shaft clockwise. This removes the roller 302a from restraining the cam C1 which is subjected to a driving torque by spring 112. Subsequent anti-clockwise rotation of cam C1 causes switch 13 to open via the linkage 113,114 and 115. The roller 301a on the first follower 301 moves around the constant radius quadrant 113 until it engages the recess at the end of this quadrant. At this point the roller 301b climbs the face of the recess in the quadrant 202 which is under torque from spring 201. This allows cam C2 to rotate and hence open the second switch 14, because the quadrant 202 is directly connected to the drive shaft 14a.

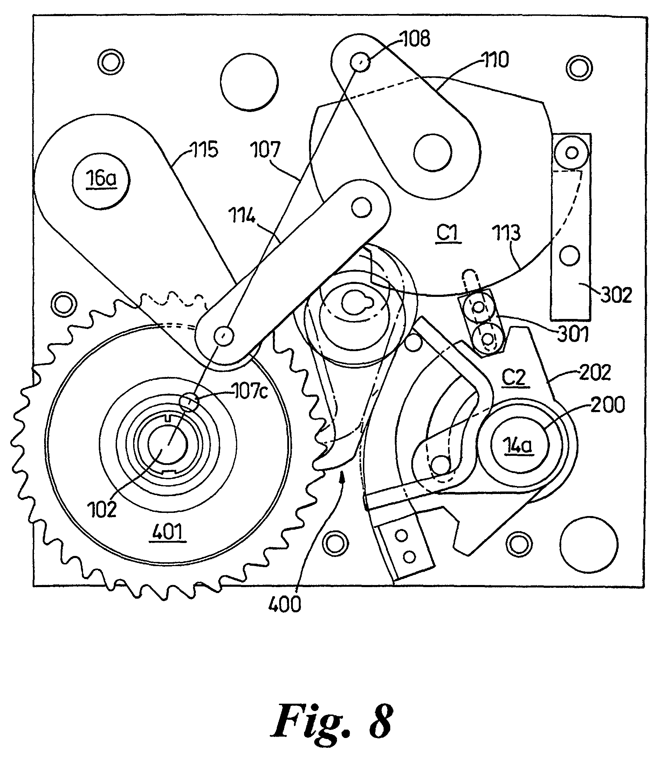

An alternative embodiment is illustrated in Figure 8 of the accompanying drawings. This embodiment differs in that the first torsion spring has been moved so that it is located around the shaft 102 that carries the charging handle. One end of the spring is fixed relative to the spring output shaft 102, whilst the other end is secured to a ratchet wheel 401 that is rotated by the shaft 102. In this embodiment, the first torsion spring is designed to hold considerably more charge than in the first embodiment so that it can be charged once for a number of subsequent open/close operations by rotating the charge handle. Charging of the spring is facilitated by a simple eccentric pawl device illustrated at 400 in Figure 8. This device (which is well known in the industry) prevents the spring from discharging.

When an open or close operation occurs the charged first torsion spring partially unwinds to rotate the ratchet wheel through a half turn. This moves the reciprocal link 107 (indicated by a line only so as not to obscure other parts of the mechanism, but pivoted to the ratchet wheel 401 at 107c and to the link 110 at 108) from one extreme position to the other on each half turn to either open or close the first switch 13. As each operation of the switch 13 is executed, the cam C1 rotates between the extremes allowed by the two cam followers 301, 302 in the same manner as previously described. Therefore the first torsion spring is allowed to discharge half a turn for each operation.

The operations above describe the action of the mechanism switching between the on and off positions. Switching to the earth position is performed in an identical manner with the exception that the cam C2 is rotated clockwise as opposed to anti-clockwise as described above.

## Claims

1. A mechanical actuator mechanism for first and second electrical switches (13, 14) connected in series, the first and second switches being driven to open or closed positions through respective first and second shafts (16, 14a) linked to respective first and second mechanical energy stores (112, 201), operation of the switches being co-ordinated by latch means (301, 302) which in use prevent or permit rotation of the shafts, thereby to synchronise release of energy from the energy stores to rotate the shafts.

2. A mechanical actuator mechanism according to claim 1, in which the mechanism is operable between at least a first position in which both switches are in an closed position and a second position in which both switches are in a open position; wherein upon movement of the mechanism from the first position to the second position the first switch moves from its closed position to its open position whereafter the second switch is automatically moved from its closed to its open position; and upon movement of the mechanism from the second position to the first position the second switch moves from its open position to its closed position whereafter the first switch is automatically moved from its open to its closed position.

3. A mechanical actuator mechanism according to claim 1 or claim 2, in which the mechanism includes a manual input device for moving the mechanism between its first and second positions.

4. A mechanical actuator mechanism according to any preceding claim, including manually powered charging means for inputting mechanical energy to one or both mechanical energy stores.

5. A mechanical actuator mechanism according to any one of claims 1 to 3, including motor-powered charging means for inputting mechanical energy to one or both mechanical energy stores.

6. A mechanical actuator mechanism according to any preceding claim, in which the mechanism is so constructed and arranged that the first mechanical energy store is charged by rotation of a shaft in a direction which is the same whether the mechanism moves from its first to its second position or from its second to its first position.

7. A mechanical actuator mechanism according to any preceding claim, in which the mechanism is adapted to force open the first switch by release of energy from the first mechanical energy store upon movement of the mechanism from the first to the second position.

8. A mechanical actuator mechanism according to claim 7, in which the mechanism is adapted to force closure of the first switch by release of mechanical energy from the first mechanical energy store upon movement of the mechanism from the second to the first position.

9. A mechanical actuator mechanism according to any preceding claim, in which the or each of the first and the second energy stores comprises spring means.

10. A mechanical actuator mechanism according to claim 9, in which the spring means comprise torsion springs.

11. A mechanical actuator mechanism according to any preceding claim, in which the first energy store is adapted to store energy in a first sense when the first switch is closed and in the opposite sense when the first switch is open.

12. A mechanical actuator mechanism according to any preceding claim, in which the energy in the first energy store acts to open and close the first switch through a reciprocating link, whereby the link is pulled one way and then pushed the other way when moving between the first and second positions of the mechanism.

13. A mechanical actuator mechanism according to claim 12, in which charging means for the first energy store comprises a drive shaft operatively connected to a first end of the reciprocating link to drive the reciprocating link, the second end of the reciprocating link being operatively connected to the first energy store.

14. A mechanical actuator mechanism according to claim 13, in which the first energy store comprises a torsion spring, the second end of the reciprocating link being operatively connected to a first end of the spring, the second end of the spring being fixed against rotation during charging by the latch means, and released by the latch means upon movement of the actuator mechanism to release energy from the torsion spring.

15. A mechanical actuator mechanism according to any preceding claim in which the mechanism is movable between the first and/or the second position to a third position in which the second switch is moved into a third position prior to the first switch moving to the open position.

16. A switch assembly which includes at least two serially connected switches controlled by an actuating mechanism in accordance with any one of Claims 1 to 15, a first switch comprising a vacuum interrupter type of switch and a second switch comprising a blade type of switch.

17. A switch assembly according to claim 16 in which the vacuum interrupter switch has a fault make/load break rating with respect to the electrical current expected in a circuit in which it is connected.
